(19) Europäisches Patentamt / European Patent Office / Office européen des brevets

(11) **EP 3 234 550 B1**

(12) **FASCICULE DE BREVET EUROPEEN**

(45) Date de publication et mention de la délivrance du brevet:
**05.01.2022 Bulletin 2022/01**

(51) Int Cl.:
**G01N 15/14** *(2006.01)* **G03H 1/00** *(2006.01)*

(21) Numéro de dépôt: **15820468.5**

(22) Date de dépôt: **17.12.2015**

(86) Numéro de dépôt international:
**PCT/EP2015/080148**

(87) Numéro de publication internationale:
**WO 2016/097092 (23.06.2016 Gazette 2016/25)**

(54) **MÉTHODE D'IDENTIFICATION DE PARTICULES BIOLOGIQUES PAR PILES D'IMAGES HOLOGRAPHIQUES DÉFOCALISÉES**

VERFAHREN ZUR IDENTIFIZIERUNG BIOLOGISCHER PARTIKEL MIT STAPELN VON DEFOKUSSIERTEN HOLOGRAFISCHEN BILDERN

METHOD FOR IDENTIFYING BIOLOGICAL PARTICLES USING STACKS OF DEFOCUSED HOLOGRAPHIC IMAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462998**

(43) Date de publication de la demande:
**25.10.2017 Bulletin 2017/43**

(73) Titulaires:
• **Commissariat à l'Énergie Atomique et aux Énergies Alternatives**
**75015 Paris (FR)**
• **Biomérieux**
**69280 Marcy-L'Etoile (FR)**

(72) Inventeurs:
• **PERRAUT, François**
**38134 Saint Joseph de Riviere (FR)**
• **JOLY, Pierre**
**38100 Grenoble (FR)**
• **JOSSO, Quentin**
**69007 Lyon (FR)**
• **KLOSTER-LANDSBERG, Meike**
**82166 Gräfelfing (DE)**
• **DOUET, Alice**
**38000 Grenoble (FR)**

(74) Mandataire: **Brevalex**
**56, Boulevard de l'Embouchure**
**B.P. 27519**
**31075 Toulouse Cedex 2 (FR)**

(56) Documents cités:
**WO-A1-2013/041951    DE-A1-102005 036 326**

• **LEE S H ET AL: "HOLOGRAPHIC MICROSCOPY OF HOLOGRAPHICALLY TRAPPED THREE-DIMENSIONAL STRUCTURES", OPTICS EXPRESS, OSA (OPTICAL SOCIETY OF AMERICA), WASHINGTON DC, (US), vol. 15, no. 4, 19 février 2007 (2007-02-19), pages 1505-1512, XP007901764, ISSN: 1094-4087, DOI: 10.1364/OE.15.001505 cité dans la demande**

EP 3 234 550 B1

## Description

## DOMAINE TECHNIQUE

La présente invention concerne de manière générale le domaine de l'analyse optique de particules biologiques. Elle trouve notamment à s'appliquer au diagnostic microbiologique, plus particulièrement à l'identification de micro-organismes et/ou de leur état en réaction à un stress. Elle peut également s'appliquer au suivi de cultures cellulaires.

## ÉTAT DE LA TECHNIQUE ANTÉRIEURE

La microscopie holographique numérique ou DHM (*Digital Holographie Microscopy*) est une technique d'imagerie connue permettant de s'affranchir des contraintes de profondeur de champ de la microscopie optique classique. Schématiquement, elle consiste à enregistrer un hologramme formé par l'interférence entre les ondes lumineuses diffractées par l'objet observé et une onde de référence présentant une cohérence spatiale. On trouvera une présentation générale de la microscopie holographique numérique dans l'article de revue de Myung K.Kim intitulé « Principles and techniques of digital holographic microscopy » publié dans SPIE Reviews Vol. 1, N°1, Janvier 2010.

Récemment, il a été proposé d'utiliser la microscopie holographique numérique pour identifier des micro-organismes de matière automatisée. Ainsi, l'article de N. Wu et al. intitulé « Three-dimensional identification of microorganisms using a digital holographic microscope » publié dans Computational and Mathematical Methods in Medicine, Vol. 2013, art. N° ID 162105 décrit une méthode d'identification de différents types de bactéries dans le volume à analyser grâce à une propagation numérique vers le plan de mise au point de la particule. Les images mises au point à différentes profondeurs sont utilisées pour reconstituer une représentation tridimensionnelle des microorganismes. Ceux-ci sont alors classifiés au moyen d'un filtrage 3D non linéaire.

De manière similaire, l'article de Ahmed El Mallahi intitulé « Automated three-dimensional détection and classification of living organisms using digital holography microscopy with partial spatial coherent source: application to monitoring of drinking water resources » publié dans Applied Optics, Vol. 52 N° 1, Janvier 2013, décrit une méthode comprenant une première étape de détection de la position des bactéries dans le volume à analyser, une étape de focalisation à différentes profondeurs du volume au moyen d'une propagation numérique, puis une classification des bactéries à partir de leurs caractéristiques morphologiques.

Les méthodes d'identification précitées sont toutefois complexes dans la mesure où elles nécessitent une focalisation dans des plans successifs de mise au point. *A contrario,* la focalisation dans un seul plan de mise au point, autrement dit à une seule profondeur d'analyse, ne suffit généralement pas à identifier un type de microorganisme avec un faible taux de fausse détection.

Le but de la présente invention est par conséquent de proposer une méthode d'identification de particules organiques par microscopie holographique numérique qui permette d'obtenir un faible taux de fausse détection tout en étant simple et Les publications WO2013/041951 A1, DE10 2005 036326 A1 et Lee et al., "Holographie microscopy of holographically trapped three-dimensional structures," Opt. Express 15, 1505-1512 (2007) divulguent des méthodes holographiques connues pour identifier des particules biologiques.

## EXPOSÉ DE L'INVENTION

La présente invention est définie par une méthode d'identification de particules biologiques à partir d'une pile d'images holographiques obtenues au moyen d'un système optique selon la revendication 1.

Un écart de défocalisation minimal est de préférence supérieur à une épaisseur maximale de la particule biologique d'intérêt, de sorte que les blocs d'image comprennent au maximum une unique image focalisée de la particule biologie d'intérêt.

Selon une première variante de réalisation, les images holographiques sont acquises par le système optique pour une pluralité de positions le long de l'axe optique.

Une image holographique est acquise par le système optique et les autres images holographiques de la pile d'images holographiques sont calculées à partir de la première image holographique au moyen d'un modèle de propagation numérique. Dans ce cas, la première image holographique est avantageusement prise avec un écart de défocalisation non nul par rapport au plan de mise au point.

Ladite image de référence peut être choisie parmi la pile d'images holographiques comme celle maximisant un critère de contraste prédéterminé.

On choisit ensuite dans la pile de blocs d'image un bloc de référence comme le bloc d'image centré sur la particule d'intérêt appartenant à l'image de référence, la position du bloc de référence sur l'axe optique étant alors choisie comme origine pour les écarts de défocalisation.

Le bloc de référence peut alors être actualisé en recherchant parmi les blocs d'image centrés sur la particule d'intérêt et appartenant aux images voisines de l'image de référence dans la pile d'images holographiques, celui maximisant un critère de contraste prédéterminé.

Selon un premier mode de réalisation, pour chaque bloc de la pile de blocs d'image, on calcule la valeur d'au moins une grandeur caractéristique sur ce bloc et que l'on obtient un profil de ladite grandeur caractéristique le long de l'axe optique à partir des valeurs de la grandeur caractéristique ainsi calculées.

On compare alors le profil de ladite grandeur caractéristique à un seuil et l'on déduit que la particule biologique d'intérêt est d'un premier type si ce profil franchit ce seuil et d'un second type s'il ne le franchit pas.

Alternativement, on compare, au moyen d'un critère de similarité, le profil de ladite grandeur caractéristique à une pluralité de profils type obtenus pour différents types connus de particules biologiques et que l'on déduit le type de la particule biologique du profil type présentant la plus grande similarité avec le profil de ladite grandeur caractéristique.

Le critère de similarité peut être choisi parmi une intercorrélation, un coefficient de Pearson, un écart quadratique.

Alternativement encore, le profil de ladite grandeur caractéristique est classé au moyen d'une méthode d'apprentissage supervisé parmi une pluralité de classes de profils, chaque classe correspondant à un type donné de particule biologique.

Selon un second mode de réalisation, on sélectionne dans ladite pile de blocs d'image une pluralité de blocs correspondant à des écarts de défocalisation prédéterminés.

On compare alors, à l'aide d'un critère de similarité, ladite pluralité de blocs sélectionnés à des mêmes pluralités de blocs type, chaque pluralité de blocs type correspondant à un type donné de particule biologique, le type de la particule biologique d'intérêt étant déduit de la pluralité de blocs type présentant la plus grande similarité avec ladite pluralité de blocs sélectionnés.

Le critère de similarité peut là encore être une intercorrélation, un écart quadratique, un écart quadratique après transformée de Fourier spatiale, un critère basé sur une analyse par composantes principales.

## BRÈVE DESCRIPTION DES DESSINS

D'autres caractéristiques et avantages de l'invention apparaîtront à la lecture de modes préférentiels de réalisation en référence aux figures jointes parmi lesquelles :

La Fig. 1 représente de manière schématique un dispositif d'enregistrement d'images holographiques utile à la méthode d'identification de particules biologiques selon l'invention ;

La Fig. 2 représente de manière schématique un organigramme de la méthode d'identification de particules biologiques selon un premier mode de réalisation de l'invention ;

La Fig. 3 représente de manière schématique l'extraction d'une pile de blocs d'image à partir d'une pile d'images ;

La Fig. 4 illustre de manière schématique la recherche d'un bloc de référence dans une pile de blocs ;

Les Figs. 5A et 5B représentent des profils axiaux d'une grandeur caractéristique respectivement deux types connus de particules biologiques ;

La Fig. 6 représente de manière schématique un organigramme de la méthode d'identification de particules biologiques selon un second mode de réalisation de l'invention ;

La Fig. 7 donne un exemple de $M$-uplet de blocs type pour différents types connus de particules biologiques.

## EXPOSÉ DÉTAILLÉ DE MODES DE RÉALISATION PARTICULIERS

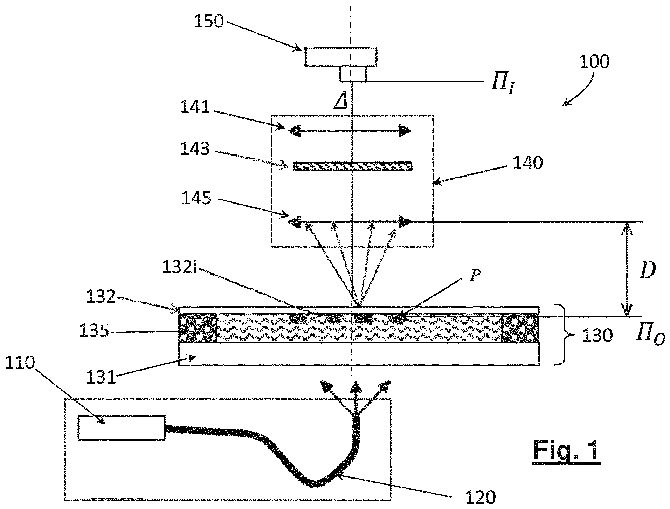

La méthode d'identification de particules biologiques selon l'invention fait appel à un dispositif d'enregistrement d'images holographiques tel que celui décrit en relation avec la Fig. 1.

Ce dispositif, 100, comprend une source lumineuse, de préférence temporellement cohérente, 110, de faible largeur spectrale, par exemple inférieure à 200 nm voire à 100 nm ou même 25 nm. Cette source lumineuse peut être notamment une diode laser ou une diode électroluminescente. La source lumineuse est de préférence spatialement cohérente. Le faisceau lumineux émis par la source est acheminé au moyen d'une fibre optique sous l'échantillon à analyser, 120. Cet échantillon consiste en un liquide tel que de l'eau, une solution tampon, un milieu de culture ou un milieu réactif, dans lequel se trouvent les particules biologiques, P, à identifier. Alternativement, l'échantillon peut se présenter sous la forme d'un milieu solide, de préférence transparent, tel qu'une gélose, dans lequel se trouvent les particules en question. L'échantillon peut également être un milieu gazeux. Les particules biologiques peuvent se situer à l'intérieur du milieu ou bien à la surface de l'échantillon.

Les particules biologiques à identifier peuvent être des microorganismes tels que des bactéries ou des levures par exemple. IL peut également s'agir de cellules, organismes multicellulaires, ou toute autre particule de type particule polluante, poussière.

La taille des particules observées varie entre 100 nm à plusieurs centaines de $\mu$m, voire quelques millimètres.

L'échantillon est enfermé dans une chambre d'analyse, 130, délimitée verticalement par une lame inférieure 131, par exemple une lame de microscope conventionnelle, et une lame supérieure 132. La chambre d'analyse est délimitée latéralement par un adhésif 135 ou par tout autre matériau étanche. Les lames inférieure et supérieure sont transparentes à la longueur d'onde de la source lumineuse. Les particules biologiques sont immobilisées dans la chambre, soit parce que le milieu dans lequel elles se trouvent est solide (gélose), soit encore parce que le milieu est fluidique mais que les particules se fixent sur la face interne 132i de la lame supérieure. Les particules peuvent être mobiles, sous réserve que leur vitesse de déplacement soit suffisamment faible pour que les particules puissent être considérées comme immobiles durant le temps de mesure.

Le dispositif 100 comprend en outre un système optique, 140, constitué par exemple d'un objectif de microscope 145 et d'une lentille de tube 141. Le système optique est optionnellement équipé d'un filtre 143 pouvant être situé devant l'objectif ou bien entre l'objectif et la lentille de tube.

Le système optique 140 est caractérisé entre autres par son axe optique $\Delta$, son plan objet $\Pi_O$, également dénommé plan de mise au point, à une distance D de l'objectif, et son plan image $\Pi_I$, conjugué du plan objet par le système optique. En d'autres termes, à un objet situé dans le plan objet, $\Pi_O$, correspond une image nette de cet objet dans le plan image, $\Pi_I$. Les plans objet et image sont orthogonaux à l'axe optique $\Delta$.

Un capteur d'images, 150, par exemple un capteur CCD ou CMOS est situé dans le plan image $\Pi_I$, ou à proximité de ce dernier. Ainsi, le capteur 150 acquiert une image en transmission d'une portion du plan de mise au point.

La position relative du système optique 140 par rapport à la chambre d'analyse 130 est réglable verticalement. Par exemple l'objectif est solidaire d'un porte-objectif pouvant se déplacer le long d'une glissière verticale. Ainsi, il est possible de réaliser une mise au point sur une ou des particules biologiques d'intérêt.

L'image formée sur le capteur d'images est une image holographique dans la mesure où elle résulte de l'interférence entre une onde diffractée par les particules biologiques et d'une onde de référence ayant traversé l'échantillon sans avoir interagi avec lui.

Alternativement, il est possible de diviser le faisceau lumineux en deux composantes, par exemple au moyen d'une lame semi-transparente (non représentée). La première composante sert alors d'onde de référence et la seconde composante est diffractée par l'échantillon, l'image dans le plan image du système optique résultant de l'interférence entre l'onde diffractée et l'onde de référence.

Les images de l'échantillon ainsi acquises sont ensuite traitées par la méthode d'identification selon l'invention.

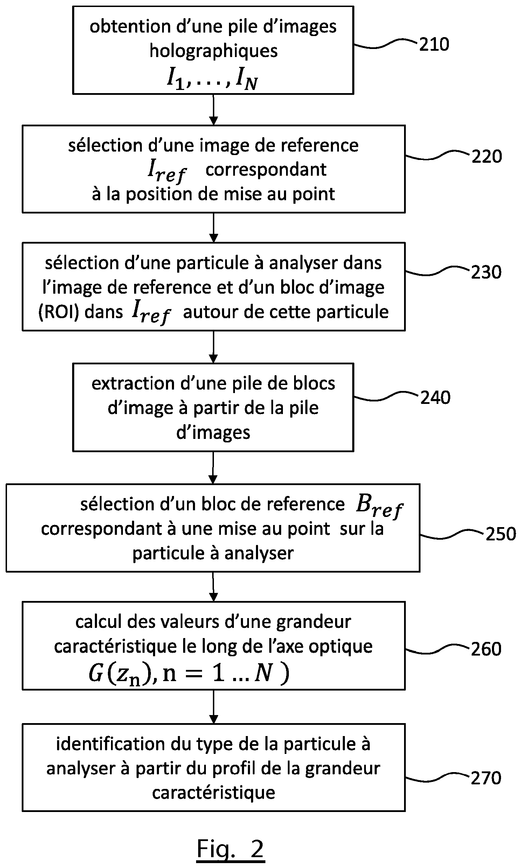

La Fig. 2 représente de manière schématique un organigramme de la méthode d'identification de particules biologiques selon un premier mode de réalisation de l'invention.

A l'étape 210, on obtient une pluralité (ou pile) d'images holographiques des particules biologiques d'intérêt au sein de l'échantillon.

Selon une première variante, ces images sont acquises de manière expérimentale par le système d'imagerie, chacune de ces images correspondant à des distances différentes à la chambre d'analyse, prises le long de l'axe optique $\Delta$.

Selon une seconde variante, une première image est acquise à une première distance de la chambre d'analyse, cette distance ne correspondant pas nécessairement à des conditions de mise au point sur ces particules. En particulier, il convient de noter que, lorsque les particules biologiques à analyser sont transparentes à la longueur d'onde de la source, cette première image ne sera pas prise dans les conditions de mise au point mais, à une distance prédéterminée de la position de mise au point. Cette distance est de préférence inférieure à 2 mm, de préférence inférieure à 1 mm, voie 500 $\mu$m. La première image ainsi acquise est alors dite défocalisée.

Des images supplémentaires sont calculées à partir d'une image initiale défocalisée, au moyen d'un modèle de propagation numérique comme expliqué ci-après. Les images supplémentaires calculées sont celles qui seraient observées à différentes distances entre le système optique et la chambre d'analyse, c'est-à-dire en différentes positions axiales du système d'imagerie.

La méthode de calcul d'image par propagation numérique, comme expliqué dans l'article de Sang-Hyuk Lee et al. intitulé « Holographic microscopy of holographically trapped three-dimensional structures » publié dans Optics Express, Vol. 15 ; N° 4, 19 Février 2007, pp. 1505-1512.

Plus précisément, si l'on note $h_z(r)$ la fonction de propagation de Rayleigh-Sommerfeld, soit :

$$h_z(r) = -\frac{1}{2\pi}\frac{\partial}{\partial z}\frac{e^{ikR}}{R} \qquad (1)$$

où $z$ est la hauteur de défocalisation, autrement dit l'écart par rapport au plan de mise au point, r = (x, y) est la position dans le plan de l'image, $R^2 = r^2 + z^2$ et $k = 2\pi n/\lambda$ est le nombre d'onde relatif au milieu de propagation, l'onde dans le plan d'ordonnée $z$ peut être exprimée sous la forme :

$$a(r,z) = \left| a(r,z) \right| \exp\left( i\varphi(r,z) \right) \qquad (2\text{-}1)$$

$$a(r,z) = \frac{1}{4\pi^2} \int_{-\infty}^{+\infty} B(q) H_{-z}(q) \exp(iqr) d^2 q \qquad (2\text{-}2)$$

où $B(q)$ est la transformée de Fourier de $b(r)$, intensité de l'onde diffractée dans le plan focal (l'intensité de l'onde de référence est ici supposée constante), $H_{-z}(r)$ est la transformée de Fourier de $h_{-z}(r)$ et q est la variable duale de $_r$ dans la transformée de Fourier.

On comprend ainsi que l'on peut construire une pile d'images $I_1,...,I_N$ pour des ordonnées $Z_1,...,Z_N$ le long de l'axe optique, l'origine des ordonnées étant prise à la position axiale de mise au point, chaque image $I_n$ étant définie par une amplitude complexe $a(r, z_n)$.

A l'étape 220, on sélectionne dans la pile d'images, $I_1,...,I_N$, obtenue à l'étape précédente, une image de référence $I_{ref}$. Cette image de référence est celle qui correspond au mieux aux conditions idéales de mise au point sur les particules biologiques d'intérêt. En effet, dans des conditions expérimentales idéales, les particules sont situées sur la face interne 132i de la lame supérieure 132 et cette face est perpendiculaire à l'axe optique $\Delta$ . Les conditions de mise au point idéales sont alors celles dans lesquelles le plan de mise au point est confondu avec la face interne précitée.

En pratique, lorsque les particules biologiques ne sont pas transparentes, la sélection de l'image de référence pourra se faire selon un critère de contraste maximal appliquée à une zone contenant les particules biologiques. Ce critère de contraste maximal pourra être par exemple un écart-type maximal ou une valeur moyenne de gradient maximale dans cette zone.

Lorsque les particules biologiques sont transparentes, on utilisera avantageusement un système optique présentant une aberration sphérique de manière à éviter une disparition complète du signal à la position de mise au point.

En tout état de cause, la position axiale de l'image de référence est alors prise comme position de référence ($z$ = 0), les positions des autres images de la pile étant calculées par rapport à cette position de référence.

A l'étape 230, on sélectionne au moins une particule à analyser dans l'image de référence. Cette sélection peut être automatisée et réalisée par exemple sur la base de critères morphologiques et/ou photométriques.

Pour chaque particule à analyser, on détermine sa position ($x$, y) dans l'image de référence et l'on détermine une région d'intérêt sous la forme d'un bloc d'image, $B_{ref}$, centré sur cette position. On notera que ce bloc peut avoir une taille plus grande ou plus faible que celle de la particule à analyser. Ce bloc d'image, $B_{ref}$, est extrait de l'image de référence $I_{ref}$.

A l'étape 240, on extrait des autres images de la pile, les blocs d'image correspondant à la même position que le bloc extrait de l'image de référence. On obtient ainsi une pile de blocs d'image, $B_1,...,B_N$, c'est-à-dire une restriction de la pile d'images à la zone d'intérêt centrée sur la particule à analyser. On comprend que chaque bloc de la pile correspond à une position axiale différente et donc à des conditions de défocalisation différentes par rapport au bloc de référence $B_{ref}$.

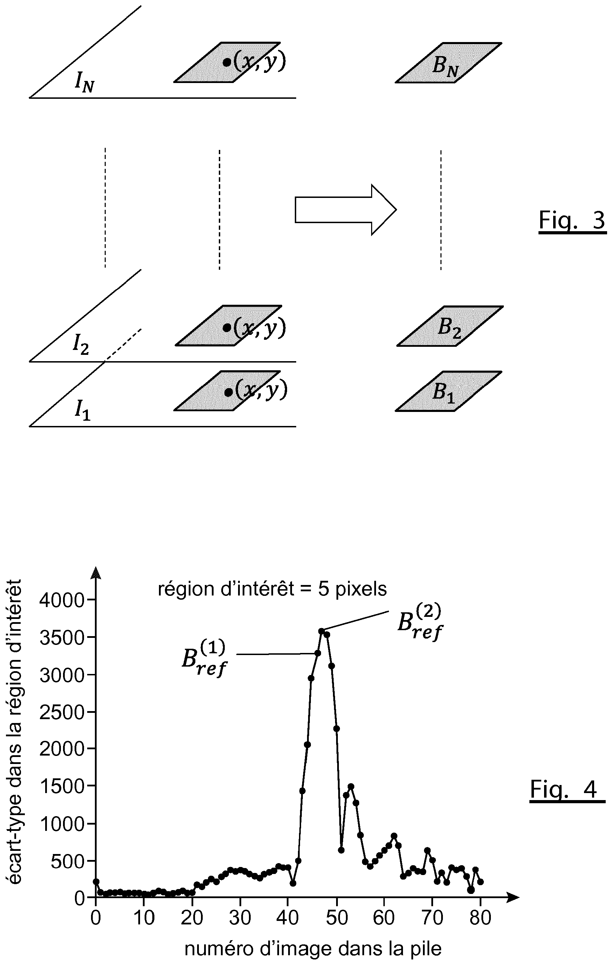

La Fig. 3 représente de manière schématique une pile d'images $I_1,...,I_N$ et une pile de blocs d'image $B_1,...,B_N$ centrés sur une particule d'intérêt P de coordonnées ($x,$ y) . Les blocs sont ici de forme carrée mais l'on comprendra que d'autres formes de bloc pourront être envisagées sans sortir du cadre de la présente invention.

Optionnellement, à l'étape 250, on affine la sélection de l'image de référence, et donc du bloc image de référence pour la particule à analyser. En effet, lorsque toutes les particules ne sont pas dans un même plan orthogonal à l'axe optique, ce qui pourra notamment être le cas lorsque la face interne de la lame supérieure n'est pas parfaitement orthogonale à l'axe optique, le plan de mise au point pourra différer d'une particule à l'autre. On recherche alors parmi les blocs de la pile, et avantageusement parmi les blocs des images de part et d'autre de l'image de référence $I_{ref}$ sélectionnée à l'étape 220, celui qui correspond au mieux aux conditions de mise au point. Cette sélection pourra être effectuée, comme à l'étape 220, au moyen d'un critère de contraste maximal, mais portant cette fois sur les blocs de la pile. Le critère de contraste maximal pourra être là encore un écart-type maximal ou une valeur moyenne de gradient maximale sur le bloc. Le bloc ainsi sélectionné devient alors le nouveau bloc de référence, $B_{ref}$, de la pile.

La Fig. 4 représente un exemple de recherche d'un bloc de référence dans une pile de blocs d'image d'une particule biologique. On a représenté en abscisses les indices des blocs, chaque bloc $B_n$ correspondant à une position axiale $Z_n$ différente, et en ordonnées l'écart-type de l'intensité des pixels dans le bloc.

La recherche de l'image de référence, $I_{ref}$, à l'étape 220 et l'extraction du bloc centré sur la particule d'intérêt à l'étape 230 donne un premier bloc de référence désigné sur la figure par $B_{ref}^{(1)}$ . La recherche plus fine de la mise au point, à l'étape optionnelle 250 donne un second bloc de référence, $B_{ref}^{(2)}$ , correspondant au maximum de la courbe de l'écart-type. Lorsque cette étape est effectuée, c'est par conséquent ce second bloc de référence qui sera pris comme bloc de référence, $B_{ref}$, pour la suite de la méthode d'identification.

A l'étape 260, on estime au moins une grandeur caractéristique $G(z_n)$ pour chaque bloc $B_n$ de la pile de blocs et l'on déduit ainsi un profil axial de cette grandeur caractéristique, le long de l'axe optique. Plus précisément si les blocs $B_1,...,B_N$ correspondent à des positions axiales $Z_1,...,Z_N$, le profil axial de bloc est constitué de la séquence $G(z_1),G(z_2),...,G(z_N)$.

Cette grandeur caractéristique peut être notamment une grandeur statistique relative au bloc, par exemple une moyenne, une médiane, un écart-type de l'intensité des pixels sur le bloc. En outre, lorsque les images de la pile ont été obtenues par propagation numérique et non acquises de manière expérimentale, une valeur complexe peut être associée à chaque pixel du bloc. La grandeur caractéristique peut alors porter sur la partie réelle ou sur la partie imaginaire de ces valeurs complexes. Par exemple, on pourra prendre comme grandeur caractéristique la moyenne au carré de la partie imaginaire de l'amplitude complexe sur le bloc, soit pour le bloc $B_n$ :

$$G(z_n) = E\left[ \left| \Im\left( a\left(r, z_n\right)\right)\right|^2 \right] \qquad (3)$$

où $E(.)$ signifie la moyenne par rapport à $r \in B_n$.

Le cas échéant, les valeurs discrètes $G(z_1),G(z_2),...,G(z_N)$ peuvent être interpolées pour obtenir une résolution plus fine du profil de la grandeur caractéristique.

A l'étape 270, on identifie le type de la particule biologique à partir du profil axial ainsi obtenu.

Selon une première variante, particulièrement simple, on peut comparer le profil axial $G(z)$ à une valeur de seuil et discriminer deux types de particules.

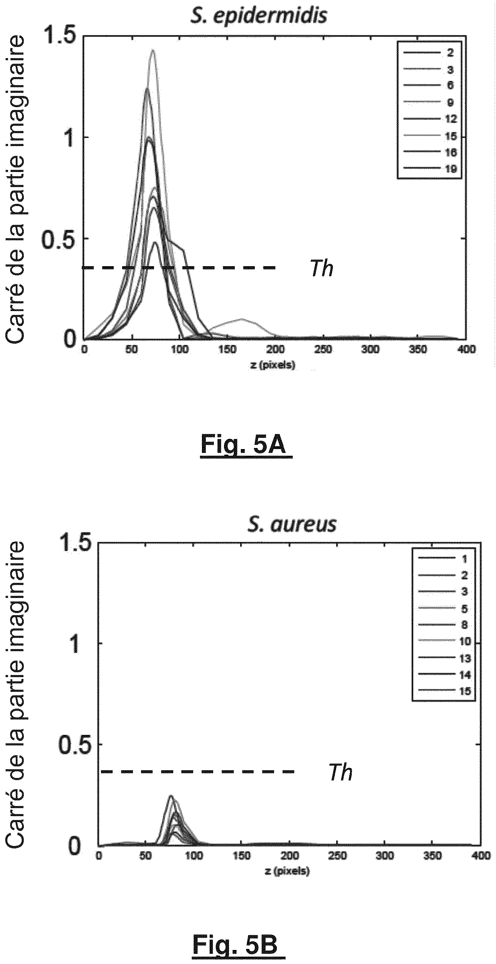

Les Figs. 5A et 5B représentent les profils axiaux d'une grandeur caractéristique (en l'occurrence, la valeur moyenne au carré de la partie imaginaire de l'amplitude dans le bloc) pour deux types de particules biologiques, à savoir pour *Staphylococcus epidermidis* (Fig. 5A) et pour *Staphylococcus aureus.* On voit ici qu'une valeur de seuil, $Th$, telle que 0.4 permet de discriminer efficacement les deux types de particules biologiques (ici deux types de staphylocoques). Si le profil axial franchit cette valeur de seuil, la particule biologique sera identifiée comme S. *epidermidis* alors que s'il ne le franchit pas il sera identifié comme *S. aureus.*

On notera que cette première variante ne nécessite pas de déterminer le bloc de référence $B_{ref}$ avec précision. Cependant, l'image de référence $I_{ref}$ devra être recherchée pour sélectionner la particule à analyser à l'étape 230.

Selon une seconde variante, le profil axial de la grandeur caractéristique est comparé, au moyen d'un critère de similarité, à des profils axiaux de cette même grandeur caractéristique préalablement obtenus pour des particules biologiques de types connus, $G_1(z),...,G_K(z)$, stockés par exemple dans une base de données. Les profils $G_1(z),...,G_K(z)$, sont dénommés profils type. Le fait d'utiliser une origine commune (bloc de référence) facilite la comparaison.

Le critère de similarité peut être par exemple une valeur d'intercorrélation ou un coefficient de Pearson. L'indice $k_{max} \in \{1,...,K\}$ pour lequel le profil type $G_k(z)$ est le plus proche du profil $G(z)$ donne le type de la particule biologique.

Selon une troisième variante d'identification, on calcule à l'étape 270 plusieurs grandeurs caractéristiques $C^\ell(z_n)$, $\ell = 1,...,L$ pour chacun des blocs $B_n$ de la pile. On obtient ainsi une pluralité de profils axiaux $G^\ell(z)$ caractérisant la particule. Cette pluralité de profils peut être comparée au moyen d'un critère de similarité à une même pluralité de profils obtenue pour chacune des K particules de type connu, soit $G_k^\ell(z)$, $\ell = 1,..., L$, $k = 1,...,K$. On détermine ensuite, à l'aide d'un critère de similarité, la pluralité de profils axiaux type $G_{k\max}^\ell(z)$ la plus proche des profils mesurés. Comme dans la première variante, l'indice $k_{max}$ donne le type de la particule biologique analysée.

Selon une quatrième variante, l'identification de la particule utilise une méthode d'apprentissage supervisé. Cette variante suppose l'acquisition préalable de profils axiaux pour une pluralité K de types de particules biologiques. On classe alors les particules biologiques en K classes en prenant comme descripteur les valeurs du profil axial ou de préférence une caractéristique de ce profil, chaque classe pouvant être représentée par un groupe de points dans un espace à L dimensions.

A partir du profil axial d'une particule biologique à analyser on détermine le point correspondant dans l'espace à L dimensions et l'on recherche le groupe de points, c'est-à-dire la classe à laquelle il appartient.

Par exemple, si l'on prend comme grandeur caractéristique d'un bloc celle définie par l'expression (3) et comme caractéristique du profil sa valeur maximale, on a pu montrer qu'il était possible de classer efficacement les bactéries *Acinetobacter johnsonii, Enterobacter aerogenes, Escherichia coli,* et *Staphylococcus epidermidis.* Ainsi sur des échantillons de populations connues, on a obtenu la matrice de confusion suivante :

$$CM = \begin{pmatrix} 139 & 24 & 52 & 4 \\ 23 & 188 & 91 & 16 \\ 16 & 54 & 260 & 1 \\ 7 & 8 & 4 & 174 \end{pmatrix}$$

où les différentes lignes correspondent à des populations de types différents et les colonnes correspondent aux classes prédites par la méthode d'identification. On note que la matrice de confusion a une diagonale prédominante et que donc le taux d'erreur d'identification est relativement faible.

L'homme du métier comprendra que les techniques habituelles d'apprentissage supervisé telles que les techniques de classifications bayésienne ou les machines à vecteurs de support pourront être utilisées pour classer les particules biologiques à partir de leurs profils axiaux.

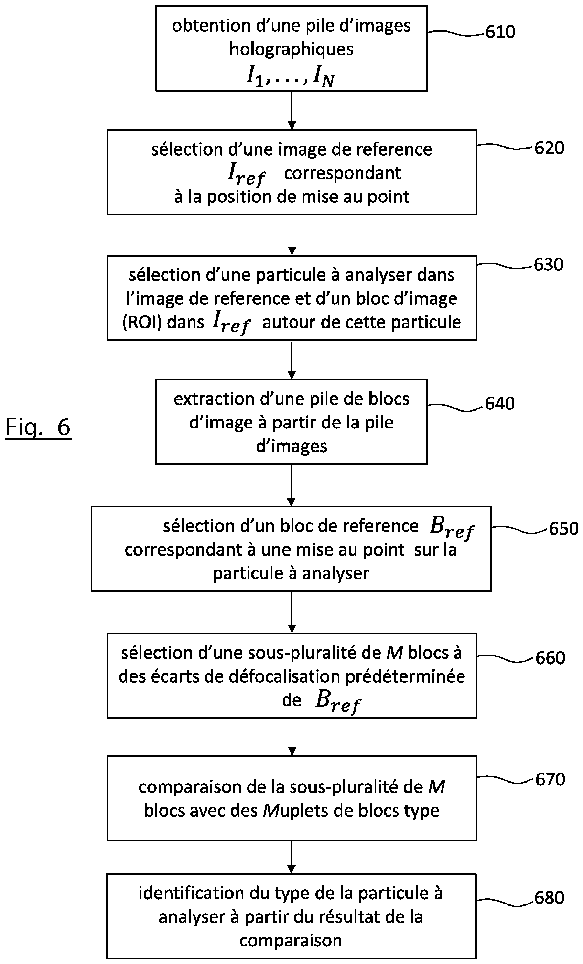

La Fig. 6 représente de manière schématique un organigramme de la méthode d'identification de particules biologiques selon un second mode de réalisation de l'invention.

La seconde méthode d'identification selon l'invention est également basée sur une pile de blocs d'image centrés sur la particule biologique d'intérêt. Les blocs sont extraits d'une pile d'images acquises ou calculées comme décrit précédemment. Plus précisément, les étapes 610 à 650 sont respectivement identiques aux étapes 610 à 650 de la méthode d'identification selon le premier mode de réalisation de l'invention. Leur description ne sera donc pas reprise ici.

Toutefois, à l'étape 660, on ne calcule pas de grandeur caractéristique mais l'on sélectionne dans la pile de blocs, une sous-pluralité M de blocs situés à des écarts (en $z$) prédéterminés par rapport au bloc de référence, $B_{ref}$ ($z = 0$). En pratique, les images de la pile étant acquises ou calculées (par propagation numérique) à des intervalles réguliers, la sélection dans la pile de blocs portera sur des indices prédéterminés par rapport à l'indice du bloc de référence.

A l'étape 670, on compare à l'aide d'un critère de similarité le $M$-uplet de blocs ainsi sélectionnés avec des $M$-uplets de blocs type, chaque $M$-uplet de blocs type étant relatif à une particule biologique de type connu, les blocs de chaque $M$-uplet ayant été eux-mêmes obtenus aux distances prédéterminées précitées.

Le critère de similarité peut être une corrélation spatiale, un coefficient de Pearson, un écart quadratique entre une transformée de Fourier des blocs de la particule à analyser et une transformée des blocs type, voire être basé sur une analyse en composantes principales (ACP). Dans ce dernier cas, on peut déterminer pour chaque bloc du $M$-uplet de blocs de la particule à analyser et chaque bloc du $M$-uplet de blocs type les axes principaux de la distribution des pixels et comparer (par exemple au moyen d'un produit scalaire de vecteurs directeurs) l'alignement des axes principaux des blocs de la particule à analyser avec les axes principaux des blocs type.

Quel que soit le critère de similarité retenu, le $M$-uplet de blocs type le plus proche du $M$-uplet de blocs de la particule à analyser, donne en 680 le type de la particule biologique.

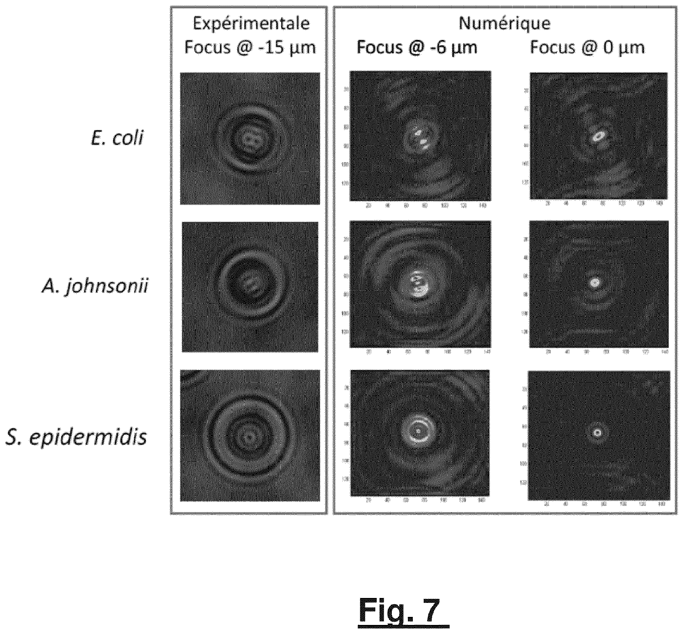

La Fig. 7 donne un exemple de $M$-uplet de blocs type pour différentes particules biologiques.

Dans le cas illustré M = 3 et les écarts prédéterminés de défocalisation sont respectivement de 15 $\mu$m (blocs d'image de la 1ère colonne), 6 $\mu$m (blocs d'image de la 2nde colonne) et 0 $\mu$m (blocs d'image de la 3ème colonne dans le plan de mise au point), les écarts étant comptés positivement dans le sens de propagation du faisceau.

Les blocs type de la première ligne sont relatifs à l'espèce *E. coli,* les blocs type de la seconde ligne sont relatifs à l'espèce *A. johnsonii* et les blocs type de la troisième ligne sont relatifs à l'espèce S. *epidmermidis.*

On observe que les blocs type des espèces *E. coli* et *A. johnsonii* ont des structures très voisines à 15 $\mu$m alors que le bloc type de S. *epidmermidis* a une structure très différente. De même, les blocs type des espèces *A. johnsonii* et S. *epidmermidis* ont des structures très voisines à 0 $\mu$m, alors que *E. coli* présente une structure très différente. L'utilisation d'un triplet de blocs d'image permet donc de lever l'ambiguïté d'identification.

**Revendications**

1. Méthode d'identification de particules biologiques à partir d'une pile d'images holographiques obtenues au moyen d'un système optique, **caractérisée en ce qu'**il comprend les étapes suivantes :

   - une première image holographique est acquise par le système optique, et les autres images holographiques de la pile d'images holographiques sont calculées à partir de la première image holographique et au moyen d'un modèle de propagation numérique, de sorte que lesdites images holographiques (210,610) de la pile d'image holographiques soient obtenues pour une pluralité d'écarts de défocalisation par rapport à un plan de mise au point sur les particules biologiques, les écarts de défocalisation étant pris le long de l'axe optique du système optique ;

- une image holographique de référence est sélectionnée (220,620) dans la pile d'images holographiques comme celle étant la plus proche du plan de mise au point sur les particules biologiques ;
- pour une particule biologique d'intérêt, on extrait (240,640) de la pile d'images holographiques une pile de blocs d'image comprenant ladite particule biologique d'intérêt ;
- on choisit, dans la pile de blocs d'image, un bloc de référence comme le bloc d'image centré sur la particule d'intérêt appartenant à l'image de référence, la position du bloc de référence sur l'axe optique étant alors choisie comme origine pour les écarts de défocalisation associés aux autres blocs d'image de la pile de blocs d'image ;-
- le type de la particule d'intérêt est identifié (270,680) à partir de la pile de blocs d'image.

2. Méthode d'identification de particules biologiques selon la revendication 1, **caractérisée en ce que** la première image holographique est prise avec un écart de défocalisation non nul par rapport au plan de mise au point.

3. Méthode d'identification de particules biologiques selon la revendication 1 ou 2, **caractérisée en ce que** ladite image de référence est choisie parmi la pile d'images holographiques comme celle maximisant un critère de contraste prédéterminé.

4. Méthode d'identification de particules biologiques selon l'une quelconque des revendications 1 à 3, **caractérisée en ce que** le bloc de référence est actualisé en recherchant parmi les blocs d'image centrés sur la particule d'intérêt et appartenant aux images voisines de l'image de référence dans la pile d'images holographiques, celui maximisant un critère de contraste prédéterminé.

5. Méthode d'identification de particules biologiques selon l'une des revendications précédentes, **caractérisée en ce que** pour chaque bloc de la pile de blocs d'image, on calcule (260) la valeur d'au moins une grandeur caractéristique sur ce bloc et que l'on obtient un profil de ladite grandeur caractéristique le long de l'axe optique à partir des valeurs de la grandeur caractéristique ainsi calculées.

6. Méthode d'identification de particules biologiques selon la revendication 5, **caractérisée en ce que** l'on compare, au moyen d'un critère de similarité, le profil de ladite grandeur caractéristique à une pluralité de profils type obtenus pour différents types connus de particules biologiques et que l'on déduit le type de la particule biologique du profil type présentant la plus grande similarité avec le profil de ladite grandeur caractéristique.

7. Méthode d'identification de particules biologiques selon la revendication 6, **caractérisée en ce que** le critère de similarité est choisi parmi une intercorrélation, un coefficient de Pearson, un écart quadratique.

8. Méthode d'identification de particules biologiques selon la revendication 5, **caractérisée en ce que** le profil de ladite grandeur caractéristique est classé au moyen d'une méthode d'apprentissage supervisé parmi une pluralité de classes de profils, chaque classe correspondant à un type donné de particule biologique.

9. Méthode d'identification de particules biologiques selon l'une quelconque des revendications 1 à 4, **caractérisée en ce que** l'on sélectionne (660) dans ladite pile de blocs d'image une pluralité de blocs correspondant à des écarts de défocalisation prédéterminés.

10. Méthode d'identification de particules biologiques selon la revendication 9, **caractérisée en ce que** l'on compare (670), à l'aide d'un critère de similarité, ladite pluralité de blocs sélectionnés à des mêmes pluralités de blocs type, chaque pluralité de blocs type correspondant à un type donné de particule biologique, le type de la particule biologique d'intérêt étant déduit (680) de la pluralité de blocs type présentant la plus grande similarité avec ladite pluralité de blocs sélectionnés.

11. Méthode d'identification de particules biologiques selon la revendication 10, **caractérisée en ce que** le critère de similarité est une intercorrélation, un écart quadratique, un écart quadratique après transformée de Fourier spatiale, un critère basé sur une analyse par composantes principales.

**Patentansprüche**

1. Verfahren zur Identifikation von biologischen Partikeln ausgehend von einem Stapel von holographischen Bildern, die mittels eines optischen Systems erhalten sind, **dadurch gekennzeichnet, dass** es die folgenden Schritte umfasst:

- ein erstes holographisches Bild wird durch das optische System aufgenommen, und die anderen holographischen Bilder des Stapels von holographischen Bildern werden ausgehend von dem ersten holographischen Bild und mittels eines digitalen Ausbreitungsmodells derart berechnet, dass die holographischen Bilder (210, 610) des Stapels von holographischen Bildern erhalten werden für eine Mehrzahl von Defokussierungsabständen bezüglich einer Ebene zur Fokussierung auf die biologischen Partikel, wobei die Defokussierungsabstände entlang der optischen Achse des optischen Systems genommen werden;

- ein holographisches Referenzbild wird in dem Stapel von holographischen Bildern ausgewählt (220, 620) als dasjenige, das der Ebene der Fokussierung auf die biologischen Partikel am nächsten ist;

- für ein biologisches Partikel von Interesse extrahiert man (240, 640) von dem Stapel von holographischen Bildern einen Stapel von Bildblöcken, umfassend das biologische Partikel von Interesse;

- man wählt in dem Stapel von Bildblöcken einen Referenzblock aus als der Bildblock, der auf das Partikel von Interesse zentriert ist, der zu dem Referenzbild gehört, wobei die Position des Referenzblocks auf der optischen Achse dann als Ursprung für die Defokussierungsabstände gewählt wird, die den anderen Bildblöcken des Stapels von Bildblöcken zugeordnet sind;

- der Typ des Partikels von Interesse wird ausgehend von dem Stapel von Bildblöcken identifiziert (270, 680).

**2.** Verfahren zur Identifikation von biologischen Partikeln nach Anspruch 1, **dadurch gekennzeichnet, dass** das erste holographische Bild mit einem Defokussierungsabstand ungleich Null bezüglich der Fokussierungsebene aufgenommen wird.

**3.** Verfahren zur Identifikation von biologischen Partikeln nach Anspruch 1 oder 2, **dadurch gekennzeichnet, dass** das Referenzbild aus dem Stapel von holographischen Bildern als dasjenige ausgewählt wird, das ein vorbestimmtes Kontrastkriterium maximiert.

**4.** Verfahren zur Identifikation von biologischen Partikeln nach einem der Ansprüche 1 bis 3, **dadurch gekennzeichnet, dass** der Referenzblock aktualisiert wird, indem man aus den Bildblöcken, die auf das Partikel von Interesse zentriert sind und zu den benachbarten Bildern des Referenzbilds in dem Stapel von holographischen Bildern gehören, denjenigen sucht, der ein vorbestimmtes Kontrastkriterium maximiert.

**5.** Verfahren zur Identifikation von biologischen Partikeln nach einem der vorhergehenden Ansprüche, **dadurch gekennzeichnet, dass** man für jeden Block des Stapels von Bildblöcken den Wert wenigstens einer charakteristischen Größe auf diesem Block berechnet (260) und dass man ein Profil der charakteristischen Größe entlang der optischen Achse ausgehend von den derart berechneten Werten der charakteristischen Größe enthält.

**6.** Verfahren zur Identifikation von biologischen Partikeln nach Anspruch 5, **dadurch gekennzeichnet, dass** man mittels eines Ähnlichkeitskriteriums das Profil der charakteristischen Größe mit einer Mehrzahl von Typprofilen vergleicht, die für verschiedene bekannte Typen von biologischen Partikeln erhalten sind, und dass man den Typ des biologischen Partikels von dem Typprofil ableitet, das die größte Ähnlichkeit mit dem Profil der charakteristischen Größe aufweist.

**7.** Verfahren zur Identifikation von biologischen Partikeln nach Anspruch 6, **dadurch gekennzeichnet, dass** das Ähnlichkeitskriterium aus einer Interkorrelation, einem Pearson-Koeffizienten, einem quadratischen Abstand ausgewählt ist.

**8.** Verfahren zur Identifikation von biologischen Partikeln nach Anspruch 5, **dadurch gekennzeichnet, dass** das Profil der charakteristischen Größe mittels eines überwachten Lernverfahrens aus einer Mehrzahl von Profilklassen klassifiziert wird, wobei jede Klasse einem gegebenen Typ von biologischem Partikel entspricht.

**9.** Verfahren zur Identifikation von biologischen Partikeln nach einem der Ansprüche 1 bis 4, **dadurch gekennzeichnet, dass** man in dem Stapel von Bildblöcken eine Mehrzahl von Blöcken auswählt (660), die vorbestimmten Defokussierungsabständen entsprechen.

**10.** Verfahren zur Identifikation von biologischen Partikeln nach Anspruch 9, **dadurch gekennzeichnet, dass** man mit Hilfe eines Ähnlichkeitskriteriums die Mehrzahl von ausgewählten Blöcken mit gleichen Mehrzahlen von Typblöcken vergleicht (670), wobei jede Mehrzahl von Typblöcken einem gegebenen Typ von biologischem Partikel entspricht, wobei der Typ des biologischen Partikels von Interesse aus der Mehrzahl von Typblöcken hergeleitet wird (680), die die größte Ähnlichkeit mit der Mehrzahl von ausgewählten Blöcken aufweist.

**11.** Verfahren zur Identifikation von biologischen Partikeln nach Anspruch 10, **dadurch gekennzeichnet, dass** das Ähnlichkeitskriterium eine Interkorrelation, ein quadratischer Abstand, ein quadratischer Abstand nach einer räumlichen FourierTransformation, ein Kriterium basierend auf einer Analyse mittels Hauptkomponenten ist.

**Claims**

**1.** A method for identifying biological particles from a stack of holographic images obtained by means of an optical system, **characterised in that** it comprises the following steps:

- a first holographic image is acquired by the optical system, and the other holographic images of the stack of holographic images are calculated from the first holographic image and by means of a digital propagation model, so that said holographic images (210, 610) of the stack of holographic images are obtained for a plurality of defocusing deviations relative to a focus plane on the biological particles, the defocusing deviations being taken along the optical axis of the optical system;
- a reference holographic image is selected (220, 620) in the stack of holographic images as that being closest to the focus plane on the biological particles;
- for a biological particle of interest, a stack of image blocks comprising said biological particles of interest is extracted (240, 640) from the stack of holographic images;
- in the stack of image blocks, a reference block is chosen as the image block centred on the particle of interest belonging to the reference image, the position of the reference block on the optical axis being then chosen as the origin for the defocusing deviations associated with the other image blocks of the stack of image blocks;
- the type of the particle of interest is identified (270, 680) from the stack of image blocks.

**2.** The method for identifying biological particles according to claim 1, **characterised in that** the first holographic image is taken with a non-zero defocusing deviation relative to the focus plane.

**3.** The method for identifying biological particles according to claim 1 or 2, **characterised in that** said reference image is chosen from the stack of holographic images as that maximising a predetermined contrast criterion.

**4.** The method for identifying biological particles according to any of claims 1 to 3, **characterised in that** the reference block is updated by searching among the image blocks centred on the particle of interest belonging to the neighbouring images of the reference image in the stack of holographic images, for that maximising a predetermined contrast criterion.

**5.** The method for identifying biological particles according to one of the previous claims, **characterised in that** for each block of the stack of image blocks, the value of at least one characteristic quantity on this block is calculated (260) and a profile of said characteristic quantity along the optical axis is obtained from the values of the characteristic quantity thus calculated.

**6.** The method for identifying biological particles according to claim 5, **characterised in that**, by means of a similarity criterion, the profile of said characteristic quantity is compared to a plurality of standard profiles obtained for different known types of biological particles, and the type of the biological particles of the standard profile having the greatest similarity with the profile of said characteristic quantity is deduced.

**7.** The method for identifying biological particles according to claim 6, **characterised in that** the similarity criterion is chosen from an inter-correlation, a Pearson coefficient, a square deviation.

**8.** The method for identifying biological particles according to claim 5, **characterised in that** the profile of said characteristic quantity is classified by means of a supervised learning method from a plurality of profile classes, each class corresponding to a given type of biological particle.

**9.** The method for identifying biological particles according to any of claims 1 to 4, **characterised in that**, in said stack of image blocks, a plurality of blocks corresponding to predetermined defocusing deviations is selected (660).

**10.** The method for identifying biological particles according to claim 9, **characterised in that**, using a similarity criterion, said plurality of selected blocks is compared (670) to same pluralities of standard blocks, each plurality of standard blocks corresponding to a given type of biological particle, the type of the biological particle of interest being deduced (680) from the plurality of standard blocks having the greatest similarity with said plurality of selected blocks.

11. The method for identifying biological particles according to claim 10, **characterised in that** the similarity criterion is an inter-correlation, a square deviation, a square deviation after a spatial Fourier transform, a criterion based on a principal component analysis.

**Fig. 1**

obtention d'une pile d'images holographiques
$$I_1, \ldots, I_N$$

— 210

sélection d'une image de reference $I_{ref}$ correspondant à la position de mise au point

— 220

sélection d'une particule à analyser dans l'image de reference et d'un bloc d'image (ROI) dans $I_{ref}$ autour de cette particule

— 230

extraction d'une pile de blocs d'image à partir de la pile d'images

— 240

sélection d'un bloc de reference $B_{ref}$ correspondant à une mise au point sur la particule à analyser

— 250

calcul des valeurs d'une grandeur caractéristique le long de l'axe optique
$$G(z_n), n = 1 \ldots N\,)$$

— 260

identification du type de la particule à analyser à partir du profil de la grandeur caractéristique

— 270

Fig. 2

$I_N$ •$(x, y)$ $B_N$

Fig. 3

$I_2$ •$(x, y)$ $B_2$

$I_1$ •$(x, y)$ $B_1$

région d'intérêt = 5 pixels

$B_{ref}^{(2)}$

$B_{ref}^{(1)}$

4000
3500
3000
2500
2000
1500
1000
500
0

écart-type dans la région d'intérêt

0   10   20   30   40   50   60   70   80

numéro d'image dans la pile

Fig. 4

**Fig. 5A**

**Fig. 5B**

obtention d'une pile d'images
holographiques
$$I_1, \ldots, I_N$$

— 610

sélection d'une image de reference
$I_{ref}$ correspondant
à la position de mise au point

— 620

sélection d'une particule à analyser dans
l'image de reference et d'un bloc d'image
(ROI) dans $I_{ref}$ autour de cette particule

— 630

## Fig. 6

extraction d'une pile de blocs
d'image à partir de la pile
d'images

— 640

sélection d'un bloc de reference $B_{ref}$
correspondant à une mise au point sur la
particule à analyser

— 650

sélection d'une sous-pluralité de *M* blocs à
des écarts de défocalisation prédéterminée
de $B_{ref}$

— 660

comparaison de la sous-pluralité de *M*
blocs avec des *M*uplets de blocs type

— 670

identification du type de la particule à
analyser à partir du résultat de la
comparaison

— 680

**Fig. 7**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013041951 A1

- DE 102005036326 A1

**Littérature non-brevet citée dans la description**

- **MYUNG K.KIM.** Principles and techniques of digital holographic microscopy. *SPIE Reviews,* Janvier 2010, vol. 1 (1
- **N. WU et al.** Three-dimensional identification of microorganisms using a digital holographic microscope. *Computational and Mathematical Methods in Medicine,* vol. 2013
- **AHMED EL MALLAHI.** Automated three-dimensional détection and classification of living organisms using digital holography microscopy with partial spatial coherent source: application to monitoring of drinking water resources. *Applied Optics,* Janvier 2013, vol. 52 (1

- **LEE et al.** Holographie microscopy of holographically trapped three-dimensional structures. *Opt. Express,* 2007, vol. 15, 1505-1512
- **SANG-HYUK LEE et al.** Holographic microscopy of holographically trapped three-dimensional structures. *Optics Express,* 19 Février 2007, vol. 15 (4), 1505-1512